Europäisches Patentamt

European Patent Office

Office européen des brevets

(11) Veröffentlichungsnummer: **0 254 942 B1**

(12) **EUROPÄISCHE PATENTSCHRIFT**

(45) Veröffentlichungstag der Patentschrift: **22.04.92**

(51) Int. Cl.⁵: **G05D 3/14**

(21) Anmeldenummer: **87110077.2**

(22) Anmeldetag: **13.07.87**

(54) **Stellantrieb.**

(30) Priorität: **15.07.86 DE 3623780**

(43) Veröffentlichungstag der Anmeldung:
**03.02.88 Patentblatt 88/05**

(45) Bekanntmachung des Hinweises auf die
Patenterteilung:
**22.04.92 Patentblatt 92/17**

(84) Benannte Vertragsstaaten:
**AT CH DE FR GB LI**

(56) Entgegenhaltungen:
**DE-A- 1 538 391**
**GB-A- 2 152 243**
**US-A- 4 070 610**

(73) Patentinhaber: **CENTRA-BÜRKLE GMBH**
**Böblinger Strasse 17**
**W-7036 Schönaich(DE)**

(72) Erfinder: **Raufenbarth, Franz, Dipl.-Phys.**
**Friesenweg 33**
**W-7036 Schönaich(DE)**

(74) Vertreter: **Herzbach, Dieter et al**
**Honeywell Europe S.A. Holding KG Patent-**
**und Lizenzabteilung Kaiserleistrasse 55**
**Postfach 184**
**W-6050 Offenbach am Main(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die vorliegende Erfindung betrifft einen Stellantrieb gemäß dem Gattungsbegriff der Patentansprüche 1 und 2.

Es ist bekannt, den Ventilkegel eines Ventils mit einer speziellen Kontur zu versehen, um - abweichend von einer linearen Kennlinie - eine Kennlinie vorzugeben, durch die in Abhängigkeit von einer Eingangsgröße eine hierzu nicht-proportionale Durchflußmenge gesteuert wird. Andererseits ist es bekannt, durch Beschaltung von die Regelabweichung bildenden Operationsverstärkern mit nicht-linearen Elementen, wie z.B. Dioden, im Rückführungszweig eine nicht-lineare Kennlinie für die Regelabweichung vorzugeben. Eine solche Kennlinie liegt aber dann nach Beschaltung des Operationsverstärkers bzw. nach einer Bearbeitung des Ventilkegels fest.

Es ist daher die Aufgabe der vorliegenden Erfindung, einen Stellantrieb anzugeben, bei welchem sowohl die Grenzwerte der Übertragungsfunktion (Kennlinie) des Stellantriebs einzeln wählbar sind als auch die Gestalt der Übertragungsfunktion in weiten Grenzen unterschiedlich wählbar ist, wobei dies kostengünstig schaltungstechnisch realisierbar sein soll.

Diese Aufgabe wird gelöst durch die kennzeichnenden Merkmale der unabhängigen Patentansprüche 1 und 2. Weitere vorteilhafte Ausgestaltungen des erfindungsgemäßen Stellantriebs sind den Unteransprüchen entnehmbar.

Die vorliegende Erfindung ermöglicht mit äußerst einfachen technischen Mitteln eine getrennte Einstellung der Grenzwerte der jeweiligen Kennlinie des Stellantriebes sowie eine Veränderung der Kennlinienform. Die Kennlinie kann hierbei progressiv und degressiv verlaufen.

Der erfindungsgemäße Stellantrieb läßt sich an die Eigenschaft von durch ihn zu betätigenden Einrichtungen, wie Ventilen oder dergleichen, äußerst einfach und rasch in weiten Grenzen anpassen, was beispielsweise von Hand durch entsprechende Einstellungen von Potentiometern innerhalb der Schaltung vorgenommen werden kann.

Anhand von in den Figuren der beiliegenden Zeichnung dargestellten Ausführungsbeispielen sei die Erfindung im folgenden näher erläutert. Es zeigen:

Fig. 1      die schematische Schaltung eines Stellantriebs mit einem Signalübertrager im Sollwertzweig des Stellungsreglers; und

Fig. 2      die schematische Schaltung eines Stellantriebs mit einem Signalübertrager im Istwertzweig des Stellungsreglers.

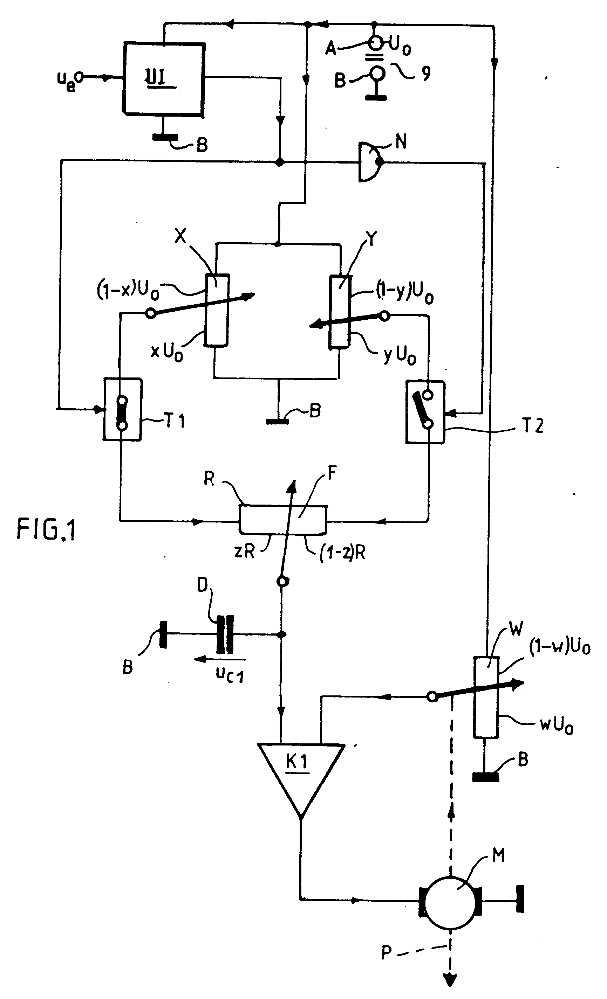

In Figur 1 ist schematisch die Schaltung eines Stellantriebs gezeigt, bei dem ein Komparator K1 einen Sollwert, der hier durch die Ladespannung $u_{c1}$ eines Kondensators D gebildet wird, mit einem Istwert vergleicht. Das Ausgangssignal des Komparators K1 steuert als Regelabweichung einen Stellmotor M an, der über ein nicht dargestelltes Getriebe die Betätigungseinrichtung, z.B. für ein nicht dargestelltes Ventil, bildet. Diese Betätigung ist durch einen gestrichelten Pfeil P angedeutet.

Der Motor M betätigt auch den Spannungsabgriff (Schleifer) eines Rückführungspotentiometers W, welches an der von einer Gleichspannungsquelle 9 gelieferten Versorgungsgleichspannung $U_0$ liegt Die am Spannungsabgriff abgreifbare Spannung $wU_0$ bildet den Istwert bzw. die Rückführungsspannung, welche dem Komparator K1 zugeführt wird. Das Komparatorausgangssignal bewirkt eine Betätigung des Motors M, wobei die Drehrichtung von dem Vorzeichen der Regel abweichung abhängig ist. Es findet also praktisch eine Regelung der Winkelstellung der Ausgangswelle des hier als elektrischer Gleichstrommotor dargestellten Motors M statt, wobei die Eingangsgröße $u_{c1}$ eine variable Führungs größe bildet, die ihrerseits abhängig ist von einem Gleichspannungs-Eingangssignal $u_e$ des Stellantriebes. Üblicherweise arbeitet der Motor M über ein Getriebe auf das Stellgleid, z.B. die Ventilstange eines Ventils. Das Signal $u_e$ bildet die Eingangsgröße des Stellantriebes und kann beispielsweise durch einen Reglerausgang vorgegeben sein.

Der Sollwert $u_{c1}$ wird in Abhängigkeit von dem Gleichspannungseingangssignal $u_e$ in einem elektronischen Signalübertrager gebildet, der nachstehend beschrieben wird.

Zwei parallel geschaltete lineare Potentiometer X und Y liegen zwischen den beiden Polen A und B der Versorgungsspannung $U_0$. Der ebenfalls lineare Widerstand R eines dritten Potentiometers F ist mit den Schleifern der beiden Potentiometer X, Y über je einen vorzugsweise elektronischen Schalter T1 und T2 verbindbar. Die Schleiferstellung teilt den Widerstand R zu beiden Seiten des Schleifers in die Widerstände $zR$ und $(1-z)R$. Die Widerstände der beiden Potentiometer X und Y sollten bevorzugt klein gegen den Widerstand R des Potentiometers F sein, so daß die Kapazität C des Kondensators D zusammen mit dem anteiligen Widerstandswert $zR$ bzw. $(1-z)R$ des Potentiometers F im wesentlichen die Zeitkonstante ZRC bzw. $(1-z)RC$ für die jeweilige Ladungsänderung des Kondensators D bestimmt.

Außerdem ist ein an sich bekannter Spannungs/Impuls-Wandler UI vorgesehen, der ebenfalls von der Versorgungsspannung $U_0$ betrieben wird und dem die Eingangsgröße $u_e$ zugeführt wird, welche beispiels-

2

weise Werte zwischen 0 Volt und $U_0$ aufweisen kann. Der Spannungs/Impuls-Wandler UI wandelt die analoge Eingangsgröße $u_e$ in eine Rechteckspannung um, deren Impuls/Pausenverhältnis s entsprechend

$$s = \frac{u_e}{U_0} = \frac{\Delta t_1}{\Delta t_1 + \Delta t_2} \qquad 0 \leqq s \leqq 1$$

gebildet wird.

Diese Rechteckspannung erscheint am Ausgang des Spannungs/Impuls-Wandlers UI und wird dem Schalter T1 direkt und dem Schalter T2 über den Inverter N als Steuersignal zugeführt, so daß immer dann, wenn der Schalter T1 eingeschaltet ist, der Schalter T2 ausgeschaltet ist und umgekehrt. Die jeweilige Zeitspanne, während der der Schalter T1 eingeschaltet und damit der Schalter T2 gesperrt ist, ist mit $\Delta t_1$ und die jeweilige Zeitspanne, während der der Schalter T1 gesperrt und der Schalter T2 eingeschaltet ist, mit $\Delta t_2$ bezeichnet.

Der Schleifer des dritten Potentiometers F ist mit dem bereits genannten Kondensator D, dessen anderer Anschluß am Minuspol der Versorgungsspannung $U_0$ liegt, und mit dem Sollwerteingang des Komparators K1 verbunden.

Die vorstehend beschriebene Schaltung arbeitet folgendermaßen, wobei angenommen sei, daß der Minuspol B der Versorgungsspannung an Masse liegt.

Der maximale Stellbereich des Motors M wird überstrichen, wenn die Eingangsgröße $u_e$ den gesamten Versorgungsspannungsbereich $U_0$ überstreicht und wenn am Schleifer des Potentiometers X die Spannung $U_0$ bzw. am Schleiferdes Potentiometers Y die Spannung 0 (oder umgekehrt) abgreifbar ist. Durch Verändern dieser Schleiferstellungen kann der Stellbereich auf unterschiedliche Grenzwerte eingestellt werden, welche den an den Schleifern abgreifbaren Spannungswerten $xU_0$ und $yU_0$ entsprechen.

Durch Veränderung der Schleiferstellung des Potentiometers F zwischen seinen beiden Endstellungen kann die Übertragungsfunktion zwischen den genannten Grenzwerten von progressiv über linear (Schleifer in Mittelstellung) bis degressiv verändert werden, wobei die Funktion steigend oder fallend verlaufen kann, je nachdem, ob $xU_0$ größer oder kleiner als $yU_0$ ist. Diese Übertragungsfunktion kann als Kennlinie oder Kurve $h = f(u_e)$ dargestellt werden, wobei h dem Drehwinkel und damit dem Stellweg des Motors M einschließlich Getriebe entspricht. Diese Kurve kann also mittels des Potentiometers F von progressiv steigend oder fallend über linear bis degressiv steigend oder fallend verstellt werden und hat im nicht-linearen Fall bei der dargestellten Schaltung nahezu logarithmische Charakteristik. Jedoch ist es auch möglich, diese Schaltung so abzuändern, daß sich auch andere nicht-lineare Kennlinien einstellen lassen, beispielsweise durch Ersatz des Kondensators D durch Kondesator-/Widerstandsketten.

Über die vom Spannungs/Impuls-Wandler UI ausgegebene Rechteckspannung werden abwechselnd die beiden Schalter T1 und T2 eingeschaltet und gesperrt. Es gilt wie oben bereits erwähnt:

$$s = \frac{\Delta t_1}{\Delta t_1 + \Delta t_2} = \frac{u_e}{U_o} \; ; \quad 0 \leqq s \leqq 1 \qquad\qquad (1)$$

Ferner gilt dann für die dargestellte Schaltung im stationären Schaltbetrieb (s = const), wenn also der Kondensator D ständig zwischen den Spannungen $xU_0$ und $yU_0$ umgeladen wird, bei linearer Näherung, die bei genügend geringer Hysterese noch gute Ergebnisse liefert:

3

$$\frac{xU_0 - u_{c1}}{zRC} \cdot \Delta t_1 = \frac{u_{c1} - yU_0}{(1-z)\ RC} \cdot \Delta t_2 \qquad (2)$$

$$\frac{u_{c1}}{U_0} = \frac{xs(1-z) + yz(1-s)}{z(1-s) + s(1-z)} = \varphi \qquad (3)$$

$C$ = Kapazität des Kondensators D.

Aus Gleichung 3 sind die in der Aufgabenstellung geforder ten Eigenschaften für die Anfangs- und Endpunkte der Kondensatorspannung $u_{c1}$ zu entnehmen, wenn der Wandler UI linear arbeitet, wie bevorzugt vorgesehen ist:

$$u_e = U_0 \rightarrow s = 1 \rightarrow \varphi = \frac{x\ (1-z)}{1-z} \rightarrow u_{c1} = xU_0$$

$$u_e = 0 \rightarrow s = 0 \rightarrow \varphi = \frac{yz}{z} \rightarrow u_{c1} = yU_0$$

Mit den beiden Potentiometern X und Y lassen sich also Anfangs- und Endpunkt für den Spannungshub von $u_{c1}$ und damit die jeweils gewünschten Grenzwerte der Kennlinie dieses Stellantriebes einstellen.

Für $z = 0,5$ (Schleifer steht in Mittelstellung des Potentiometers F) sind die beiden Ladezeitkonstanten des Kondensators D gleich. Dann ergibt sich

$\phi = sx + y \bullet (1-s)$

Wenn sich in diesem Fall also s von 0 bis 1 ändert, so bewegt sich $u_{c1}$ zwischen $yU_0$ und $xU_0$ und die Kennlinie dieses Stellantriebes ist dann eine Gerade. Die Gerade steigt, wenn $x > y$ ist, und sie fällt, wenn $y > x$ ist.

Das gleiche gilt auch für die Fälle, wo $z \neq 0,5$ ist. Diese sollen nun noch näher untersucht werden.

Differenziert man Gleichung 3 nach s, so ergibt sich

$$\frac{d\varphi}{ds} = \frac{z(1-z) \cdot (x-y)}{\lfloor s(1-z) + z(1-s) \rfloor^2}$$

Aus Gleichung 4 ergibt sich für $s = 0$:

$$\frac{d\varphi}{ds} = \frac{1-z}{z}\ (x-y)$$

Für $s = 1$ folgt:

$$\frac{d\varphi}{ds} = \frac{z}{1-z}\ (x-y)$$

Aus beiden Gleichungen ergibt sich, daß der Differentialquotient für $z = 0,5$ am Anfang und Ende der Kennlinie den Betrag $x - y$ hat. Aus Gleichung 3 ergibt sich direkt, daß dies auch über der gesamten s-Achse gilt.

Aus den Beziehungen für s = 0 und s = 1 ergibt sich nun für die die jeweilige Kennlinie dieses Stellgliedes bildende Kurve:

z < 0,5 :      Kurvenanstieg am Anfang (s = 0) steil, am Ende (s = 1) flach

z > 0,5 :      Kurvenanstieg am Anfang (s = 0) flach, am Ende (s = 1) steil.

Die gewünschte logaritmische Charakteristik läßt sich über einen genügend großen Bereich erreichen. Bis s = 0,1 herunter ist die Abweichung vom logarithmischen Verlauf im interessierenden Bereich von z kleiner als 2%.

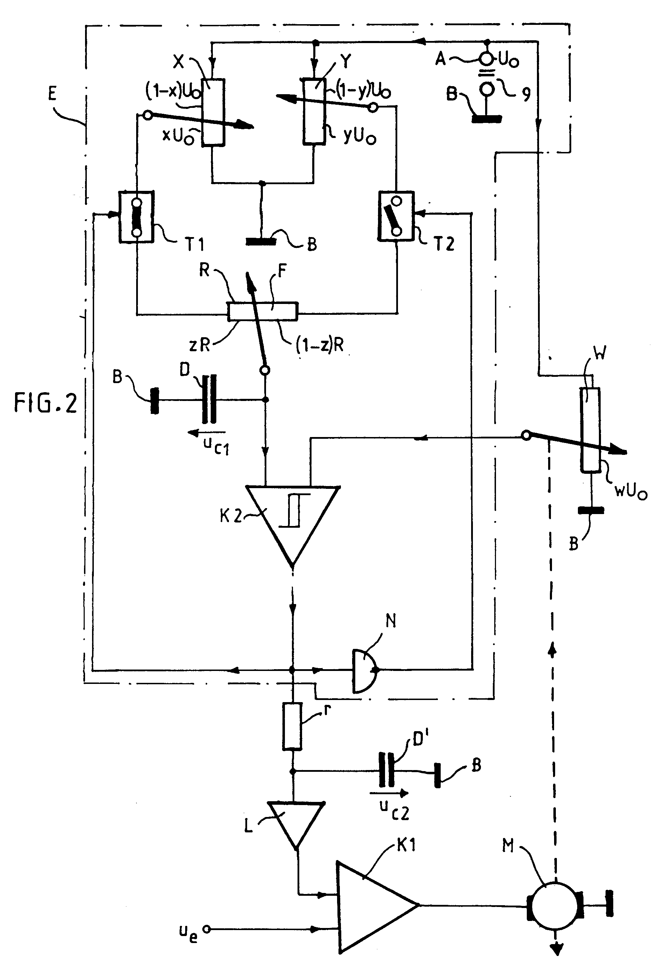

In Figur 2 ist schematisch die Schaltung eines Stellantriebes gezeigt, bei dem der Komparator K1 den Sollwert, der hier mit der Eingangsgröße $u_e$ identisch ist, mit einem Istwert vergleicht, wobei in diesem Fall der Signalübertrager im Istwertzweig zwischen dem Schleifer des Rückführungspotentiometers W und dem Istwerteingang des Komparators K1 angeordnet ist.

Bei diesem Signalübertrager sind die Spannungsteiler bildenden Potentiometer X, Y und F, die beiden Schalter T1 und T2, sowie der Kondensator D in der gleichen Weise, wie in Fig. 1 beschrieben, angeordnet und ebenso zu bedienen. Die Schleifer des Potentiometers F und des Rückführungspotentiometers W sind jedoch hier mit den Eingängen eines zweiten Komparators K2 verbunden. Dieser Komparator K2 kann besonders zweckmäßig ein Schmitt-Trigger, aber ggf. auch ein anderer elektronischer Schalter mit kleiner Hysterese, sein. Dieser Schalter K2 liefert an seinem Ausgang ein Signal, das wieder ein Rechtecksignal mit einem Impuls/Pausenverhältnis s ist, welches dem Steuereingang des Schalters T1 direkt und dem Steuereingang des Schalters T2 über einen Inverter N zugeführt wird. Das Ausgangssignal des Komparators K2 wird außerdem zur Glättung über ein Tiefpaßfilter, bestehend aus einem Widerstand r und einem weiteren Kondensator D′ sowie über einen Trennverstärker L dem Komparator K1 als Istwert zugeführt. Auch bei dieser Schaltung sind zweckmäßig die Widerstände der Potentiometer X, Y klein gegen den Widerstand des Potentiometers F. Im Betrieb wird durch das Rückführungspotentiometer W das Impuls/Pausenverhältnis s des Ausgangssignales des Komparators K2 verstellt.

Die Spannung $xU_0$ am Schleifer des Potentiometers X wird während der Zeitspanne $\Delta t_1$ über den Widerstand zR an den Kondensator D angelegt. Andererseits wird während der Zeitspanne $\Delta t_2$ die Spannung $yU_0$ über den Widerstand (1-z)R an den Kondensator D angelegt. Der Kondensator D wird also bei richtiger Ankopplung der beiden Schalter T1 und T2 innerhalb der Hysterese des Komparators K2 zwischen den Spannungen $xU_0$ und $yU_0$ hin und her geladen. Für diese Ladevorgänge gilt nun unter der Voraussetzung genügend kleiner Hysterese des Komparators K2 mit guter Näherung:

$$\frac{xU_0 - u_{c1}}{zRC} \; \Delta t_1 \; = \; \frac{u_{c1} - yU_0}{(1-z)RC} \; \Delta t_2$$

Da $u_{c1}$ der Spannung $wU_0$ am Rückführungspotentiometer W entspricht, ergibt sich

$$\frac{xU_0 - wU_0}{z} \cdot s \; = \; \frac{wU_0 - yU_0}{(1-z)} \cdot (1-s)$$

$$\frac{x-w}{z} \cdot s \qquad = \frac{w-y}{(1-z)} \cdot (1-s)$$

Das sich einstellende Schaltverhältnis s ergibt sich daraus zu:

$$s \; = \; \frac{z(y-w)}{z(y-w) - (1-z) \cdot (x-w)} \qquad\qquad (5)$$

Aus Gleichung 5 folgt für z = 0,5 die lineare Abhängigkeit s von w:

$$s = \frac{y-w}{y-x}$$

Ist $w = y$, so folgt $s = 0$ und für $w = x$ folgt $s = 1$. Voraussetzungsgemäß ist $0 \leqq = s \leqq 1$, und damit ist die letzte Gleichung nur für Werte von w zwischen x und y definiert.

Die letzte Gleichung läßt auch wieder erkennen, daß die Kennlinie des Stellantriebs invertiert werden kann. Ist $y > x$, so fällt die Kennlinie, ist $y < x$, so steigt sie. Diese letzten Betrachtungen gelten auch für den allgemeinen Fall nach Gleichung 5.

Durch Differentiation von Gleichung 5 nach w erhält man:

$$\frac{ds}{dw} = \frac{z(1-z) \cdot (x-y)}{\left[z(y-w) - (1-z)(x-w)\right]^2} \qquad (6)$$

Für $w = y$ folgt:

$$\frac{ds}{dw} = \frac{z}{1-z} \cdot \frac{1}{x-y}$$

Ist $z < 0,5$, so ist die Neigung der Kurve bei $w = y$ kleiner, für $z > 0,5$ wird sie größer.

Für $w = x$ folgt:

$$\frac{ds}{dw} = \frac{1-z}{z} \cdot \frac{1}{x-y}$$

Dies zeigt, daß der Kurvenverlauf bei $w = x$ gerade umgekehrt ist wie bei $w = y$. Auch hier ist es also wieder möglich, neben linearen Kennlinien auch solche mit progressiv oder degressiv steigender und fallender Neigung einzustellen.

Aus den beiden letzten Gleichungen ist weiterhin wieder zu erkennen, daß bei $x = y$ der Übergang von einer fallenden auf eine steigende Kennlinie stattfindet.

Am Kondensator D′ liegt nun, wie sich leicht zeigen läßt, eine Spannung an, die sich mit guter Näherung aus der folgenden Beziehung ergibt:

$$u_{c2} = sU_0 = \frac{z(y-w)}{z(y-w) - (1-z) \cdot (x-w)} U_0$$

Diese Spannung $u_{c2}$ wirkt also wie die Ausgangsspannung eines in weiten Grenzen in seiner Charakteristik variierbaren Rückführungspotentiometers. Sie wird über den Trennverstärker L zum Vergleich mit Eingangsspannung $u_e$ geführt. Die Differenz zwischen $u_{c2}$ - $u_e$ wird dann zur Ansteuerung des Stellmotors M und zur Verringerung der jeweiligen Regelabweichung ggf. bis auf Null benutzt.

Die in Fig. 1 dargestellte Schaltung enthält den Spannungs/Impuls-Wandler UI; der in Figur 2 strichpunktiert eingerahmte Schaltungsteil E bildet ebenfalls einen Spannungs/Impuls-Wandler und dieser Schaltungsteil kann somit auch als Spannungs/Impuls-Wandler UI in Figur 1 eingesetzt werden, wobei die Eingangsgröße $u_e$ der ihr über den Schleifer des Potentiometers W in Fig. 2 zugeführten Spannung entspricht und man kann dann für das Potentiometer F zwei Festwiderstände vorsehen, die zweckmäßig gleich groß sind. Das Schaltverhältnis s dieses Spannungs/Impuls-Wandlers kann, wenn er in Figur 1 als Wandler UI eingesetzt wird, sich zweckmäßig von 0 nach 1 bewegen, wenn die Eingangsspannung von $xU_0$ nach $yU_0$ läuft. Damit wird also eine beliebig einstellbare Begrenzung des Eingangsbereiches möglich. Dies schafft u.a. die Möglichkeit, mehrere solche Stellantriebe, wenn sie solche Wandler aufweisen, für Sequenzschaltungen von Stellmotoren vorzusehen, da man dann den Übergang von dem einen Stellmotor auf den nächsten Stellmotor mittels der Potentiometer X und Y genau einstellen kann.

Der Komparator K2 arbeitet also als Gleichspannungs/Impuls-wandler. Mit seinem Schaltverhältnis s wird der Kondensator D' aufgeladen bzw. entladen und es ergibt sich

$$u_{c2} = sU_0$$

Die Nichtlinearität wird bei der Schaltung nach Fig. 2 direkt am Rückkopplungszweig eingeführt. Der Gleichspannungs/Impulswandler K2 ergibt im Rückkopplungszweig dann ein lineares Schaltverhältnis, wenn z = 0,5 ist, also wenn der Schleifer des Potentiometers F in der Mitte steht.

**Patentansprüche**

1. Stellantrieb zur Betätigung einer Einrichtung, insbesondere eines Ventils, einer Drosselklappe usw., mit einer an eine Gleichspannungsquelle ($U_0$) anschließbaren elektronischen Schaltung zum Ableiten eines der Ansteuerung eines Stellmotors (M) dienenden Ausgangssignales mittels Verarbeitung einer ein Eingangssignal bildenden Eingangsgröße ($U_e$) und mittels einer die jeweilige Stellung des Stellmotors erfassenden Rückmeldeeinrichtung (W), und mit einem Komparator ($K_1$), welcher einen der variablen Eingangsgröße zugeordneten Sollwert ($u_{c1}$) mit einem von der Rückmeldeeinrichtung (W) gebildeten Istwert vergleicht und dessen Ausgangssignal die Verstellung des Stellmotors bewirkt, **dadurch gekennzeichnet,** daß zwei mit konstanter Gleichspannung beaufschlagte, parallel geschaltete Spannungsteiler (X, Y) angeordnet sind, daß ein dritter Spannungsteiler (F) angeordnet ist, der mit den Spannungsabgriffen des ersten und des zweiten Spannungsteilers (X, Y) über je einen Schalter (T1, T2) verbindbar ist, daß ein Spannungs/Impuls-Wandler (UI) angeordnet ist, dessen Eingang die Eingangsgröße ($u_e$) zugeführt wird und an dessen Ausgang ein Rechtecksignal mit einem von der Eingangsgröße ($u_e$) abhängigen Impuls-/Pausenverhältnis (s) auftritt, daß das Ausgangssignal des Spannungs/Impuls-Wandlers (UI) dem Steuereingang des einen Schalters (T1) direkt und dem Steuereingang des anderen Schalters (T2) invertiert zugeführt wird, und daß der Spannungsabgriff des dritten Spannungsteilers mit mindestens einem Kondensator (D) verbunden ist, dessen Ladespannung ($u_{c1}$) dem Komparator (K1) als Sollwert zugeführt wird.

2. Stellantrieb zur Betätigung einer Einrichtung, insbesondere eines Ventils, einer Drosselklappe usw., mit einer an eine Gleichspannungsquelle ($U_0$) anschließbaren elektronischen Schaltung zum Ableiten eines der Ansteuerung eines Stellmotors (M) dienenden Ausgangssignales mittels Verarbeitung einer ein Eingangssignal bildenden Eingangsgröße ($U_e$) und mittels einer die jeweilige Stellung des Stellmotors erfassenden Rückmeldeeinrichtung (W), und mit einem ersten Komparator ($K_1$), welcher die ihm als Sollwert zugeführte variable Eingangsgröße mit einem von der Rückmeldeeinrichtung (W) gebildeten Istwert vergleicht und dessen Ausgangssignal die Verstellung des Stellmotors bewirkt, **dadurch gekennzeichnet,** daß zwei mit konstanter Gleichspannung beaufschlagte, parallel geschaltete Spannungsteiler (X, Y) angeordnet sind, daß ein dritter Spannungsteiler (F) angeordnet ist, der mit dem Spannungsabgriff des ersten und des zweiten Spannungsteilers (X, Y) über je einen Schalter (T1, T2) verbindbar ist, daß der Spannungsabgriff des dritten Spannungsteilers (F) mit mindestens einem Kondensator (D) verbunden ist, dessen Ladespannung ($u_{c1}$) dem einen Eingang eines zweiten Komparators (K2) zuleitbar ist, wobei dem anderen Eingang des zweiten Komparators (K2) ein von der Rückmeldeeinrichtung (W) geliefertes Rückmeldesignal aufgeschaltet ist, so daß dieser zweite Komparator (K2) ein in Abhängigkeit der Eingangsgröße ($u_e$) und der Einstellung der Spannungsteiler moduliertes Ausgangssignal liefert, aus welchem das dem betreffenden Eingang des ersten Komparators (K1) aufschaltbare Istwertsignal ableitbar ist.

3. Stellantrieb nach Anspruch 2, **dadurch gekennzeichnet,** daß der zweite Komparator (K2) ein Schmitt-Trigger ist.

4. Stellantrieb nach Anspruch 2 oder 3, **dadurch gekennzeichnet,** daß das Ausgangssignal des zweiten Komparators (K2) einem Tiefpaßfilter (r, D') zugeführt wird, dessen Ausgangssignal ($u_{c2}$) als Istwertsignal über einen Trennverstärker (L) dem ersten Komparator (K1) zugeführt wird.

5. Stellantrieb nach einem der vorhergehenden Ansprüche, **dadurch gekennzeichnet,** daß die Schalter (T1, T2) Transistoren sind.

**6.** Stellantrieb nach einem der vorhergehenden Ansprüche, **dadurch gekennzeichnet,** daß mindestens einer der Spannungsteiler (X,Y,F) ein Potentiometer ist.

**7.** Stellantrieb nach Anspruch 6, **dadurch gekennzeichnet,** daß der Widerstandswert des dritten Potentiometers (F) groß im Vergleich zu dem Widerstandswert des ersten und zweiten Potentiometers (X,Y) ist.

**Claims**

**1.** Servoactuator for the actuation of a device, in particular of a valve, a throttle flap, etc. comprising an electronic circuit connected to a DC source ($U_0$) for deriving an output signal serving to feed a servomotor (M) by means of an input value ($U_e$) forming an input signal and by means of a feedback device (W) sensing the position of the servomotor, and comprising a comparator (K1) which compares a set value ($u_{c1}$) related to the variable input value to a measured value sensed by the feedback device (W) and with the comparator output signal serving to position the servomotor, **characterized in that** two voltage dividers (X,Y) are arranged in parallel and are supplied with a constant DC voltage, that a third voltage divider (F) is provided, which is connectable to the voltage taps of the first and second voltage divider (X,Y) via a switch (T1,T2) each, that a voltage/pulse converter (UI) is provided, the input of which is fed by the input value ($u_e$) and the output of which delivers a square wave signal having a duty cycle (s) related to the input value ($u_e$), that the output signal of the voltage/pulse converter (UI) is directly fed to the control input of one switch (T1) and is inverted and fed to the other switch (T2), and that the voltage tap of the third voltage divider is connected to at least one capacitor (D), the voltage ($u_{c1}$) of which is fed to the comparator (K1) as the set value.

**2.** Servoactuator for the actuation of a device, in particular of a valve, a throttle flap, etc. comprising an electronic circuit connected to a DC source ($U_0$) for deriving an output signal serving to feed a servomotor (M) by means of an input value ($U_e$) forming an input signal and by means of a feedback device (W) sensing the position of the servomotor, and comprising a first comparator (K1) which compares a set value ($u_{c1}$) related to the variable input value to a measured value sensed by the feedback device (W) and with the comparator output signal serving to position the servomotor, **characterized in that** two voltage dividers (X,Y) are arranged in parallel and are supplied with a constant DC voltage, that a third voltage divider (F) is provided, which is connectable to the voltage taps of the first and second voltage divider (X,Y) via a switch (T1,T2) each, that a voltage/pulse converter (UI) is provided, that the voltage tap of the third voltage divider (F) is connected to at least one capacitor (D), the voltage ($u_{c1}$) of which is feedable to an input of a second comparator (K2), whereat the other input of the second comparator (K2) is fed by a feedback signal provided from the feedback device (W), so that said second comparator delivers a modulated output signal as a function of the input value ($u_e$) and the adjustment of the voltage dividers from which output signal the measured value is derived which is connected to the input of the first comparator (K1).

**3.** Servoactuator according to claim 2, **characterized in that** the second comparator (K2) is a Schmitt trigger.

**4.** Servoactuator according to claim 2 or 3, **characterized in that** the output signal of the second comparator (K2) is supplied to a low-pass filter (r,D'), the output signal ($u_{c2}$) of which is supplied to the first comparator (K1) via an isolating amplifier (L).

**5.** Servoactuator according to one of the preceding claims, **characterized in that** the switches (T1,T2) are transistors.

**6.** Servoactuator according to one of the preceding claims, **characterized in that** at least one of the voltage dividers (X,Y,F) is a potentiometer.

**7.** Servoactuator according to claim 6, **characterized in that** the resistance value of the third potentiometer (F) is large in comparison to the resistance value of the first and second potentiometer (X,Y).

**Revendications**

1. Actionneur destiné à actionner un dispositif, notamment une vanne, un papillon d'étranglement, etc, comportant un circuit électronique pouvant être raccordé à une source de tension continue ($U_0$) et à produire un signal de sortie utilisé pour la commande d'un servomoteur (M), au moyen du traitement d'une grandeur d'entrée ($U_e$) constituant un signal d'entrée, et au moyen d'un dispositif de signalisation en retour (W) qui détecte la position respective du servomoteur, et un comparateur (K1), qui compare une valeur de consigne ($u_{c1}$), associée à la grandeur d'entrée variable, à une valeur réelle formée par le dispositif de signalisation en retour (W) et dont le signal de sortie provoque le mouvement du servomoteur, caractérisé en ce qu'il est prévu deux diviseurs de tension (X,Y) chargés par une tension continue constante et branchés en parallèle,en ce qu'il est prévu un troisième diviseur de tension (F), qui peut être raccordé aux prises de tension des premier et second diviseurs de tension (X,Y), par l'intermédiaire d'interrupteurs respectifs (T1,T2),en ce qu'il est prévu un convertisseur tension/impulsion (UI), dont l'entrée reçoit la grandeur d'entrée ($u_e$) et à la sortie duquel apparaît un signal rectangulaire possédant un rapport impulsion/pause (s), qui dépend de la grandeur d'entrée ($u_e$),en ce que le signal de sortie du convertisseur tension/impulsion (UI) est envoyé directement à l'entrée de commande d'un interrupteur (T1) et, en étant inversé, à l'entrée de commande de l'autre interrupteur (T2), et que la prise de tension du troisième diviseur de tension est raccordée à au moins un condensateur (D), dont la tension de charge ($u_c$) est envoyée en tant que valeur de consigne au comparateur (K1).

2. Actionneur destiné à actionner un dispositif, notamment une vanne, un papillon d'étranglement, etc, comportant un circuit électronique pouvant être raccordé à une source de tension continue ($U_0$) et à produire un signal de sortie utilisé pour la commande d'un servomoteur (M), au moyen du traitement d'une grandeur d'entrée ($U_e$) constituant un signal d'entrée, et au moyen d'un dispositif de signalisation en retour (W) qui détecte la position respective du servomoteur, et un premier comparateur (K1), qui compare une valeur de consigne ($u_{c1}$), associée à la grandeur d'entrée variable, à une valeur réelle formée par le dispositif de signalisation en retour (W) et dont le signal de sortie provoque le mouvement du servomoteur, caractérisé en ce qu'il est prévu deux diviseurs de tension (X,Y) chargés par une tension continue constante et branchés en parallèle, en ce qu'il est-prévu un troisième diviseur de tension (F), qui peut être raccordé à la prise de tension des premier et second diviseurs de tension (X,Y) par l'intermédiaire d'interrupteurs respectifs (T1,T2), en ce que la prise de tension du troisième diviseur de tension (F) est raccordée à au moins un condensateur (D), dont la tension de charge ($u_{c1}$) peut être appliquée à une entrée d'un second comparateur (K2), l'autre entrée du second comparateur (K1) recevant un signal de signalisation en retour délivré par le dispositif de signalisation en retour (W), de sorte que ce second comparateur (K2) délivre un signal de sortie qui est modulé en fonction de la grandeur d'entrée ($u_e$) et du réglage des diviseurs de tension et à partir duquel peut être obtenu le signal de valeur réelle pouvant être appliqué à l'entrée considérée du premier comparateur (K1).

3. Actionneur selon la revendication 2, caractérisé en ce que le second comparateur (K2) est un déclencheur de Schmitt.

4. Actionneur selon la revendication 2 ou 3, caractérisé en ce que le signal de sortie du second comparateur (K2) est envoyé à un filtre passe-bas (r,D'), dont le signal de sortie ($u_{c2}$) est envoyé en tant que signal de valeur réelle au premier comparateur (K1) par l'intermédiaire d'un amplificateur de séparation (L).

5. Actionneur selon l'une des revendications précédentes, caractérisé en ce que les interrupteurs (T1,T2) sont des transistors.

6. Actionneur selon l'une des revendications précédentes, caractérisé en ce qu'au moins l'un des diviseurs de tension (X,Y,F) est un potentiomètre.

7. Actionneur selon la revendication 6, caractérisé en ce que la valeur résistive du troisième potentiomètre (F) est élevée par rapport à la valeur résistive des premier et second potentiomètres (X,Y).

FIG.1

FIG.2